# EUROPÄISCHE PATENTSCHRIFT

(11) **EP 2 835 787 B1**
(45) Veröffentlichungstag und Bekanntmachung des Hinweises auf die Patenterteilung: **27.04.2016**
(21) Anmeldenummer: 13179399.4
(22) Anmeldetag: 06.08.2013
(51) Int. Cl.: G07B 15/02, G01S 5/00

(54) **System zur Erfassung von Kundenmedien umfassend einen RF-Transceiver in einem öffentlichen Verkehrsmittel**
System for detecting customer media comprising an RF transceiver in a public transportation vehicle
Système de détection de supports clients comprenant un émetteur-récepteur RF dans un moyen de transport public

(43) Veröffentlichungstag der Anmeldung: 11.02.2015
(73) Patentinhaber: SKIDATA AG, 5083 Grödig/Salzburg (AT)
(72) Erfinder: Surkau, Reinhard, 5083 Grödig/Salzburg (AT); Egli, Charles, 1033 Cheseaux (CH); Maupas, Fabien, 25300 Pontarlier (FR); Prevost, Olivier, 25300 Pontarlier (FR)
(74) Vertreter: Karakatsanis, Georgios

(56) Entgegenhaltungen:
- WO-A1-01/20557
- WO-A1-2011/066327
- US-A1- 2008 100 450
- US-A1- 2011 025 464

## Beschreibung

Die vorliegende Erfindung bezieht sich auf ein System zur Erfassung von Kundenmedien umfassend einen RF-Transceiver in einem öffentlichen Verkehrsmittel, insbesondere zur Implementierung eines Be-in-be-out-Ticket-Erfassungssystems gemäß dem Oberbegriff des Patentanspruchs 1.

Bei einem Be-in-be-out-Ticket-Erfassungssystem entsteht die Notwendigkeit einer möglichst exakten Lokalisierung der Kundenmedien innerhalb des Verkehrsmittels, wobei ein Kundenmedium jeweils einer Person zugeordnet ist. Zur Erfassung eines Kundenmediums umfassend einen RF-Transceiver werden Leseeinrichtungen verwendet, welche in der Regel im Bereich GHz, z.B. bei 860 - 950 MHz, 2,4 GHz oder höher mit den Kundenmedien kommunizieren.

Hierbei kann in nachteiliger Weise die Situation entstehen, dass aufgrund einer Überreichweite durch die Leseeinrichtungen auch Kundenmedien erfasst werden, welche sich außerhalb des Verkehrsmittels befinden. Dies kann beispielsweise der Fall sein, wenn ein Radfahrer mit einem Kundenmedium neben einem Stadtbus fährt.

Der vorliegenden Erfindung liegt daher die Aufgabe zugrunde, ein System zur Erfassung von Kundenmedien umfassend einen RF-Transceiver anzugeben, welches das erwähnte Problem der Überreichweite weitgehend löst und bei geringer Leistung der Leseeinrichtungen eine möglichst exakte Lokalisierung der Kundenmedien gewährleistet.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein System zur Erfassung von Kundenmedien umfassend einen RF-Transceiver in einem Verkehrsmittel vorgeschlagen, welches pro Fahrgastraum oder Wagen eine Mehrzahl von Leseeinrichtungen umfasst, die miteinander und mit einem als On-Board-Unit dienenden Rechner des Verkehrsmittels über einen CAN-Bus oder weitere geeignete Mittel zum Zweck der Datenkommunikation verbunden sind. Über den CAN-Bus kann auch die Stromversorgung der Leseeinrichtungen gewährleistet werden. Die Leseeinrichtungen liefern an die On-Board- Unit auch Information über die Signalstärke, mit der das Signal eines Kundenmediums von der Leseeinrichtung empfangen worden ist und/oder über die Signallaufzeit des Signals des Kundenmediums. In der On-Board-Unit erfolgt die Speicherung und optional die Auswertung der Daten der Kundenmedien, beispielsweise der Medieninformation, welche eine eineindeutige Nummer sein kann, wobei anhand der Signallaufzeit und/oder der Signalstärke der Signale der Kundenmedien, eine Lokalisierung der Kundenmedien durchgeführt werden kann. Ferner werden von der On-Board-Unit die Leseeinrichtungen gesteuert, um die Kommunikation mit den Kundenmedien durchzuführen.

Hierbei sind die Leseeinrichtungen derart angeordnet, dass je zwei Leseeinrichtungen an gegenüberliegenden vorzugsweise seitlichen Wänden des Fahrgastraums oder Wagens vorgesehen sind, welche den Raum bis zur gegenüberliegenden Wand abdecken, so dass zum einen eine hohe Redundanz des Systems bei der Gewinnung der Daten geschaffen wird und zum anderen die Ausfallsicherheit erhöht wird, da für den Fall, dass eine Leseeinrichtung ausfällt, der Raum durch die gegenüberliegende Leseeinrichtung erfasst wird. Durch die redundante Erfassung können die Daten der beteiligten Leseeinrichtungen zum Zweck der Ermittlung einer lokalen Positionierung des Kundenmediums herangezogen werden, was anhand der Signalstärke oder der Signallaufzeit erfolgt, mit der das Signal des Kundenmediums von der jeweiligen Leseeinrichtung empfangen worden ist. Durch das redundante Lesen des Kundenmediums kann auch ein gegenseitiger positiver Check der Leseeinrichtungen ermöglicht werden, um Ausfälle von Sende- und Empfangskomponenten der Leseeinrichtungen zu detektieren.

Im Rahmen einer Weiterbildung der Erfindung erstreckt sich der Erfassungsbereich einer an der Seitenwand des Fahrgastraums oder eines Wagens angebrachten Leseeinrichtung bis zu den dieser Leseeinrichtung diagonal gegenüberliegenden Leseeinrichtungen, wodurch jeweils vier Leseeinrichtungen ein gemeinsames Volumen abdecken. Dies bedeutet, dass bei gleichzeitiger Erfassung eines Kundemediums bis zu vier empfangene Signale (jeweils von einer Leseeinrichtung) an die On-Board-Unit weitergeleitet werden. Durch diese hohe Redundanz und anhand der Signalstärke oder Signallaufzeit, mit der das Signal des Kundenmediums von der jeweiligen Leseeinrichtung empfangen worden ist, kann die Ortsbestimmung des Kundenmediums optimiert werden.

Die Leseeinrichtungen können auch so angeordnet sein, dass jeweils zwei Leseeinrichtungen im Dachbereich oder im Bodenbereich symmetrisch um die Längsachse des Fahrgastraums oder Wagens angeordnet sind, wobei der Erfassungsbereich der jeweils zwei Leseeinrichtungen im Wesentlichen identisch ist und im Wesentlichen die gesamte Breite des Fahrgastraums oder Wagens im Bodenbereich bzw. im Dachbereich abdeckt, wobei axial betrachtet der Bodenbereich bzw. der Dachbereich entlang einer vorgegebenen Länge abgedeckt wird.

Ferner können je zwei Leseeinrichtungen sich gegenüberliegend im Boden- und Dachbereich des Fahrgastraums oder Wagens angeordnet sein, wobei die Leseeinrichtungen den Raum bis zum gegenüberliegenden Dach- bzw. Bodenbereich abdecken.

Hierbei kann auch vorgesehen sein, dass der Erfassungsbereich der derart angeordneten Leseeinrichtungen axial betrachtet den Erfassungsbereich der axial betrachtet benachbarten Leseeinrichtungen ganz oder teilweise abdeckt, wodurch jeweils bis zu sechs Leseeinrichtungen ein gemeinsames Volumen bis zu einer vorgegebenen Höhe abdecken. Dies bedeutet, dass bei gleichzeitiger Erfassung eines Kundemediums bis zu sechs empfangene Signale an die On-Board-Unit weitergeleitet und ausgewertet werden, wodurch anhand der Signalstärke oder Signallaufzeit, mit der das Signal des Kundenmediums von der jeweiligen Leseeinrichtung empfangen worden ist, die lokale Ortsbestimmung des Kundenmediums optimiert werden kann.

Die Leseeinrichtungen sind vorzugsweise so angeordnet, dass durch eine Mehrzahl von sich gegenüberliegenden oder im Dachbereich oder im Bodenbereich symmetrisch um die Mittellängsachse des Fahrgastraums vorgesehenen Leseeinrichtungen der gesamte Innenraum des Fahrgastraums oder des Wagens abgedeckt wird. Hierbei wird die Erfassung der Kundenmedien über eine rein direkte Sichtverbindung durchgeführt.

Durch eine Erhöhung der Anzahl der Leseeinrichtungen sinkt das von einer Leseeinrichtung zu erfassende Detektionsvolumen, wodurch die erforderliche Sendeleistung pro Leseeinrichtung abgesenkt werden kann. Die Anzahl der Leseeinrichtungen ist vorzugsweise derart gewählt, dass der Fahrgastraum oder der Wagen redundant ganz abgedeckt wird, ohne eine signifikante Überreichweite über den Fahrgastraum oder den Wagen hinaus zu bewirken, was darin resultiert, dass die Sendeleistung pro Leseeinrichtung gering gehalten wird.

Folglich wird zum Einen die Sendeleistung reduziert, wobei zum anderen die Überreichweite und folglich die Zahl der Erfassungen von sich außerhalb eines Fahrgastraums oder Wagens befindlichen Kundenmedien weitgehend minimiert wird.

Die Leseeinrichtungen weisen zum Senden und Empfangen von Signalen jeweils nur eine Antenne auf. Im Rahmen einer Weiterbildung der Erfindung weisen die Leseeinrichtungen einen Wake-up-Modulator auf, über den mittels der Antenne ein Wakeup-Signal für die Kundenmedien ausgestrahlt werden kann. Nach Erhalt des Wake-up-Signals werden die entsprechend ausgeführten Kundenmedien von einem Sleep-Modus in einen Aktiv-Modus versetzt.

Das Wake-up-Signal wird vorzugsweise amplitudenmoduliert gesendet und enthält eine vorgegebene Signalfolge, wobei beispielsweise das von einer Antenne des Kundenmediums empfangene Signal von einem als Wake-up-Erfassungsmodul dienenden Operationsverstärker verstärkt und demoduliert und von einem im Sleep-Modus teilweise aktivierten Mikroprozessor des Kundenmediums ausgewertet wird, wobei für den Fall eines als gültig erkannten Wake-up-Signals, d.h. eines Signals mit der richtigen Sequenz, der Mikroprozessor vollständig aktiviert wird und ein Tranceiver des Kundenmediums eingeschaltet wird, wodurch das Kundenmedium in einen Aktiv-Modus übergeht, im Rahmen dessen die Kommunikation mit der On-Board-Unit über zumindest eine Leseeinrichtung erfolgen kann.

Die Antennen sind als gerichtet strahlende und empfangende Antennen und vorzugsweise als Patch-Antennen auf einem PCB-Substrat ausgeführt. Derartige Antennen weisen bei einer sehr flachen Bauform die gewünschte Richtcharakteristik auf, wobei der Öffnungskegel durch entsprechende Wahl der Dimensionen und Zahl der Patches eingestellt werden kann. Auf diese Weise wird die räumliche Selektivität erhöht und die Analyse des sogenannten In/Out-Problems (Kundenmedium befindet sich im Verkehrsmittel oder außerhalb) hinsichtlich der Lokalisierung des Kundenmediums vereinfacht.

Die Leseeinrichtung weist vorzugsweise ein flaches Gehäuse auf (beispielsweise mit einer Höhe von 8 mm), wobei die im montierten Zustand dem Fahrgastraum oder dem Wagen zugewandte Seite die Antenne enthält und auf der Rückseite die erforderliche Elektronik, z.B. ein Transceiver und ggf. ein Wake-up-Modulator angeordnet ist.

Diese Ausgestaltung der Antennen ermöglicht auch eine leicht gewölbte Ausführung sowie das Vorsehen einer flachen Kunststoffabdeckung, so dass eine unauffällige und geeignete Platzierung der Leseeinrichtungen im Dachbereich oder im Wandbereich des Fahrgastraumes ermöglicht wird.

Die Erfindung wird im Folgenden anhand der beigefügten Figuren beispielhaft näher erläutert. Es zeigen:
Figur 1: Eine schematische Draufsicht einer ersten Ausgestaltung der Anordnung der Leseeinrichtungen des Systems zur Erfassung von Kundenmedien;
Figur 2: Eine Schnittansicht zur Veranschaulichung der Anordnung gemäß Figur 1;
Figur 3: Eine perspektivische Ansicht einer Variante der Ausgestaltung der Anordnung der Leseeinrichtungen des Systems zur Erfassung von Kundenmedien gemäß Figur 1;
Figur 4: Eine Schnittansicht eines Fahrgastraums zur Veranschaulichung einer weiteren Ausgestaltung der Anordnung der Leseeinrichtungen des Systems zur Erfassung von Kundenmedien;
Figur 5: Eine schematische Draufsicht einer weiteren Ausgestaltung der Anordnung der Leseeinrichtungen des Systems zur Erfassung von Kundenmedien;
Figur 6: Eine schematische Draufsicht einer weiteren Ausgestaltung der Anordnung der Leseeinrichtungen des Systems zur Erfassung von Kundenmedien;
Figur 7: Eine schematische Schnittansicht zur Veranschaulichung des Aufbaus einer Leseeinrichtung gemäß der Erfindung; und
Figur 8: Eine schematische Schnittansicht der Anordnung einer Leseeinrichtung gemäß Figur 7 am Dach eines Fahrgastraums.

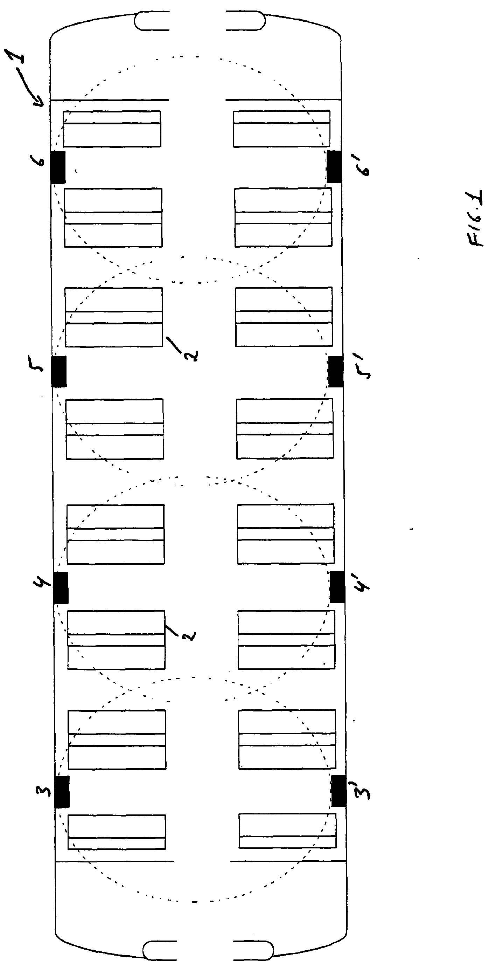

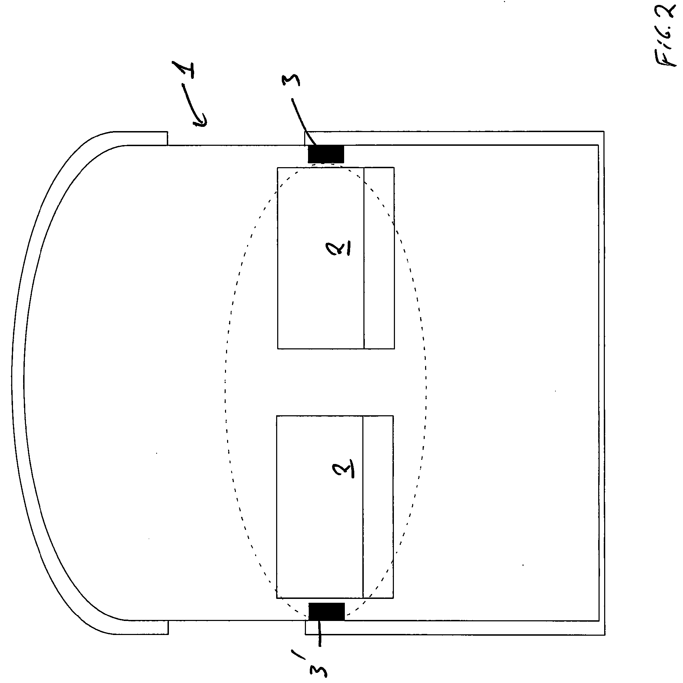

In Figur 1 ist ein Fahrgastraum 1 dargestellt, welcher mehrere Sitze 2 umfasst. Gemäß einer ersten Ausgestaltung der Erfindung sind die Leseeinrichtungen des Systems derart angeordnet, dass je zwei Leseeinrichtungen 3, 3', 4, 4', 5,5', 6, 6' an gegenüberliegenden seitlichen Wänden des Fahrgastraums vorgesehen sind, welche den Raum bis zur gegenüberliegenden Wand abdecken. Dadurch wird eine hohe Redundanz des Systems bei der Gewinnung der Daten geschaffen, wobei in vorteilhafter Weise die Ausfallsicherheit erhöht wird, da für den Fall, dass eine Leseeinrichtung ausfällt, der Raum durch die gegenüberliegende Leseeinrichtung erfasst wird, wie zudem anhand Figur 2 anhand der Leseeinrichtungen 3, 3'veranschaulicht.

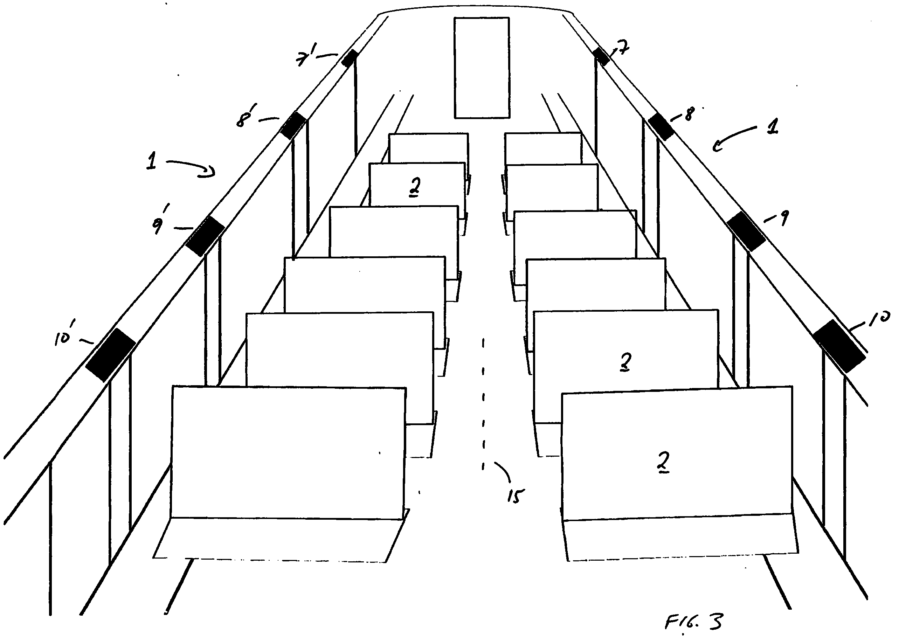

Gegenstand der Figur 3 ist die Anordnung gemäß Figur 1, wobei je zwei Leseeinrichtungen 7, 7', 8, 8', 9, 9', 10, 10' an gegenüberliegenden seitlichen Wänden des Fahrgastraums vorgesehen sind, welche den Raum bis zur gegenüberliegenden Wand abdecken, wobei die Leseeinrichtungen 7, 7', 8, 8', 9, 9', 10, 10' höher als bei dem in Figuren 1 und 2 gezeigten Beispiel angeordnet sind. Die Längsachse des Fahrgastraums ist mit dem Bezugszeichen 15 versehen.

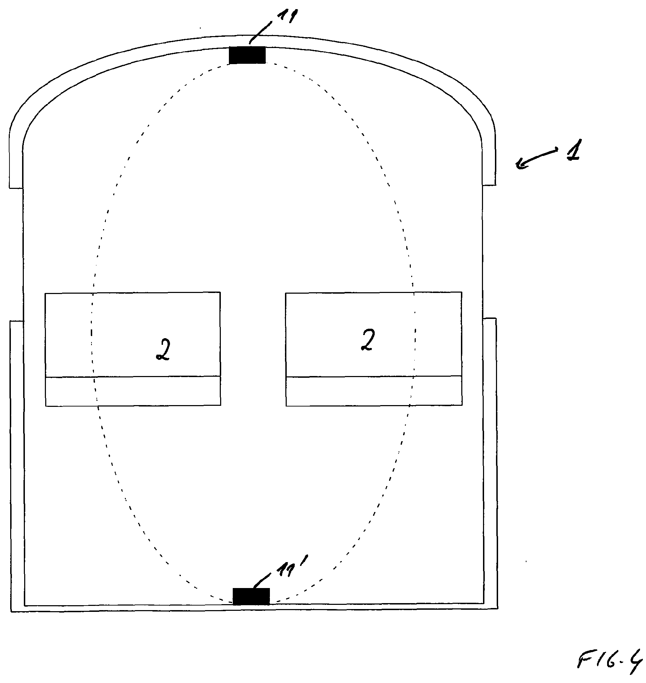

Bei dem in Figur 4 gezeigten Beispiel sind je zwei Leseeinrichtungen 11, 11' sich gegenüberliegend im Boden- und Dachbereich des Fahrgastraums 1 angeordnet, wobei die Leseeinrichtungen 11, 11' den Raum bis zum gegenüberliegenden Dach- bzw. Bodenbereich abdecken. Diese Ausgestaltung weist den Vorteil auf, dass aufgrund des ausreichenden zur Verfügung stehenden Bauraumes dieser optimal genutzt wird.

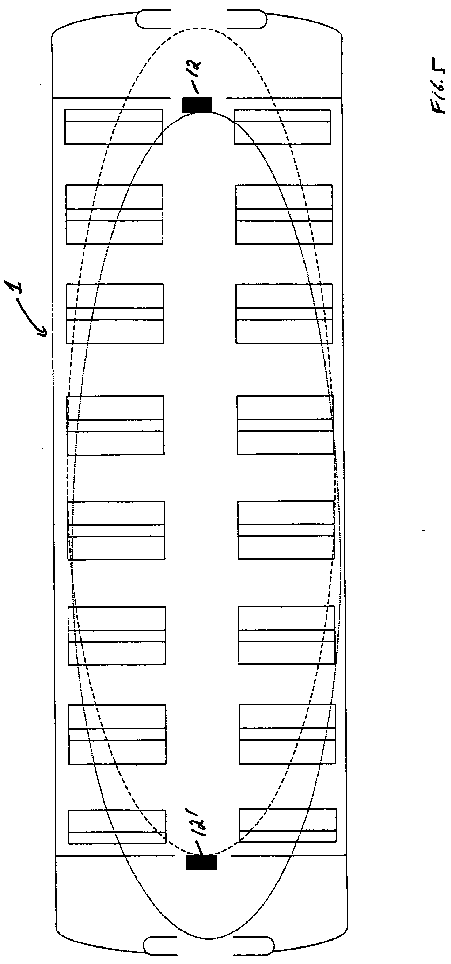

Gemäß Figur 5 können zur Abdeckung eines Fahrgastraums 1 zwei Leseeinrichtungen 12, 12' an gegenüberliegenden Stirnwänden (Stirnwand und Rückwand) eines Fahrgastraums angeordnet sein, wobei sich der Erfassungsbereich dieser Leseeinrichtungen bis zu der dieser Leseeinrichtung gegenüberliegenden Leseeinrichtung erstreckt, wodurch die Leseeinrichtungen ein gemeinsames Volumen abdecken, was dem Fahrgastraum 1 entspricht.

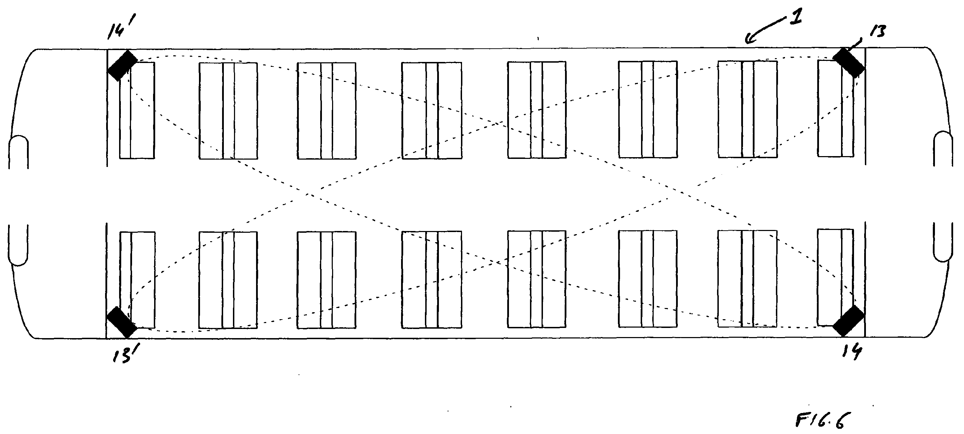

Eine Weiterbildung der Anordnung gemäß Figur 5 ist in Figur 6 dargestellt. Hierbei sind je zwei Leseeinrichtungen 13, 13', 14, 14' jeweils an gegenüberliegenden Ecken des Fahrgastraums 1 angeordnet, wobei sich der Erfassungsbereich der Leseeinrichtungen bis zu der der jeweiligen Leseeinrichtung diagonal gegenüberliegenden Leseeinrichtung erstreckt.

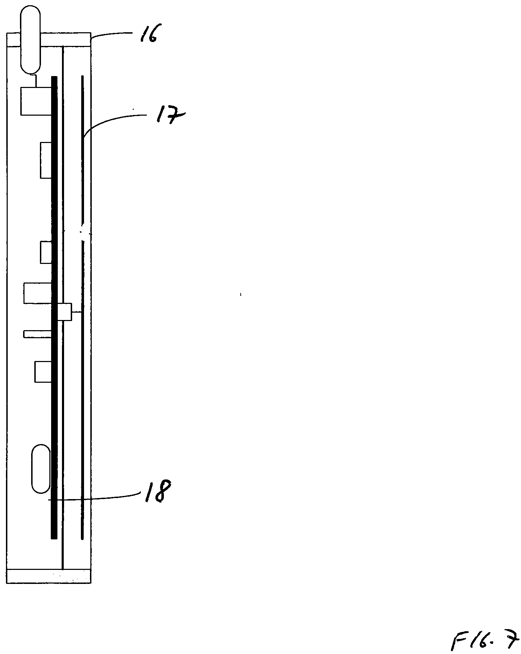

Bezugnehmend auf Figur 7 weisen die Leseeinrichtungen ein flaches Gehäuse 16 auf; die im montierten Zustand dem Fahrgastraum 1 zugewandte Seite enthält die Antenne 17, welche vorzugsweise auf einem PCB-Substrat 18 ausgeführt ist, wobei auf der Rückseite die erforderliche Elektronik angeordnet ist.

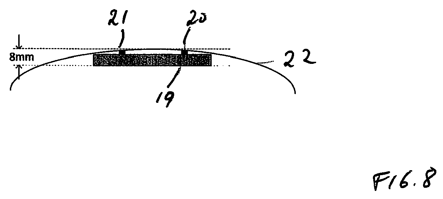

Diese Ausgestaltung der Antennen ermöglicht eine leicht gewölbte Ausführung sowie das Vorsehen einer flachen Kunststoffabdeckung bei den Leseeinrichtungen, so dass eine unauffällige und geeignete Platzierung der Leseeinrichtungen im Dachbereich oder im Wandbereich des Fahrgastraumes ermöglicht wird. Bei dem in Figur 8 gezeigten Beispiel ist eine Leseeinrichtung 19 im Dachbereich 22 eines Fahrgastraums mittels Magneten 20, 21 angeordnet. Vorzugsweise beträgt die Dicke einer derartig ausgeführten Leseeinrichtung 8 mm.

Das erfindungsgemäße System kann zur Erfassung von Kundenmedien auch in Kinos, Museen und weiteren geschlossenen Räumen implementiert werden.

## Patentansprüche

1. System zur Erfassung von Kundenmedien umfassend einen RF-Transceiver in einem öffentlichen Verkehrsmittel, wobei das System pro Fahrgastraum oder Wagen eine Mehrzahl von Leseeinrichtungen umfasst, die miteinander und mit einem als On-Board-Unit dienenden Rechner zum Zweck der Datenkommunikation verbunden sind, **dadurch gekennzeichnet, dass** die Leseeinrichtungen derart angeordnet sind, dass je zwei Leseeinrichtungen an gegenüberliegenden seitlichen Wänden des Fahrgastraums oder Wagens vorgesehen sind, welche den Raum bis zur gegenüberliegenden Wand abdecken, oder dass jeweils zwei Leseeinrichtungen im Dachbereich oder Bodenbereich symmetrisch um die Längsachse des Fahrgastraums oder Wagens angeordnet sind, wobei der Erfassungsbereich der jeweils zwei Leseeinrichtungen im Wesentlichen identisch ist und im Wesentlichen die gesamte Breite des Fahrgastraums oder Wagens im Bodenbereich bzw. im Dachbereich abdeckt, wobei axial betrachtet der Bodenbereich bzw. der Dachbereich entlang einer vorgegebenen Länge abgedeckt wird.

2. System zur Erfassung von Kundenmedien nach Anspruch 1, **dadurch gekennzeichnet, dass** durch die Mehrzahl von Leseeinrichtungen der gesamte Innenraum des Fahrgastraums oder des Wagens abgedeckt wird.

3. System zur Erfassung von Kundenmedien nach Anspruch 1 oder 2, **dadurch gekennzeichnet, dass** für den Fall, dass die Leseeinrichtungen derart angeordnet sind, dass je zwei Leseeinrichtungen an gegenüberliegenden seitlichen Wänden des Fahrgastraums oder Wagens vorgesehen sind, welche den Raum bis zur gegenüberliegenden Wand abdecken, sich der Erfassungsbereich einer an der Seitenwand des Fahrgastraums oder eines Wagens angebrachten Leseeinrichtung bis zu den dieser Leseeinrichtung diagonal gegenüberliegenden Leseeinrichtungen erstreckt, wodurch jeweils vier Leseeinrichtungen ein gemeinsames Volumen abdecken.

4. System zur Erfassung von Kundenmedien nach Anspruch 1 oder 2, **dadurch gekennzeichnet, dass** für den Fall, dass jeweils zwei Leseeinrichtungen im Dachbereich oder im Bodenbereich symmetrisch um die Mittellängsachse des Fahrgastraums oder Wagens angeordnet sind, wobei der Erfassungsbereich der Leseeinrichtungen im Wesentlichen identisch ist und im Wesentlichen die gesamte Breite des Fahrgastraums oder Wagens im Bodenbereich bzw. im Dachbereich abdeckt, der Erfassungsbereich der derart angeordneten Leseeinrichtungen axial betrachtet den Erfassungsbereich der axial betrachtet benachbarten Leseeinrichtungen ganz oder teilweise abdeckt, wodurch jeweils bis zu sechs Leseeinrichtungen ein gemeinsames Volumen bis zu einer vorgegebenen Höhe abdecken.

5. System zur Erfassung von Kundenmedien nach Anspruch 1, 2, 3 oder 4, **dadurch gekennzeichnet, dass** die Anzahl der Leseeinrichtungen derart bemessen ist, dass der Fahrgastraum oder der Wagen redundant ganz abgedeckt wird, ohne eine signifikante Überreichweite über den Fahrgastraum oder den Wagen hinaus zu bewirken.

6. System zur Erfassung von Kundenmedien nach Anspruch 1, 2, 3, 4 oder 5, **dadurch gekennzeichnet, dass** die Leseeinrichtungen zum Senden und Empfangen von Signalen jeweils nur eine Antenne aufweisen, die als gerichtet strahlende und empfangende Antenne ausgeführt ist

7. System zur Erfassung von Kundenmedien nach Anspruch 6, **dadurch gekennzeichnet, dass** die Antenne als Patch-Antenne ausgeführt ist.

8. System zur Erfassung von Kundenmedien nach Anspruch 6 oder 7, **dadurch gekennzeichnet, dass** die Leseeinrichtungen jeweils einen Wake-up-Modulator aufweisen, über den mittels der Antenne ein Wake-up-Signal für die Kundenmedien ausgestrahlt werden kann.

9. System zur Erfassung von Kundenmedien nach Anspruch 7 oder 8, **dadurch gekennzeichnet, dass** die Leseeinrichtungen ein flaches Gehäuse aufweisen, wobei die im montierten Zustand dem Fahrgastraum oder dem Wagen zugewandte Seite die Antenne enthält und auf der Rückseite die erforderliche Elektronik angeordnet ist.

## Claims

1. A system for detecting customer media comprising an RF transceiver in public transport, wherein the system comprises a plurality of reading devices per passenger compartment or carriage, which reading devices are connected to one another and to a computer serving as on-board unit for the purpose of data communication, **characterised in that** the reading devices are arranged in such a manner that in each case two reading devices are provided on opposite side walls of the passenger compartment or carriage, which cover the space up to the opposite wall, or **in that** in each case two reading devices are arranged in the roof area or floor area symmetrically about the longitudinal axis of the passenger compartment or carriage, wherein the detection area of the two reading devices in each case is essentially identical and essentially covers the entire width of the passenger compartment or carriage in the floor area or in the roof area, wherein, as observed axially, the floor area or the roof area is covered along a predetermined length.

2. The system for detecting customer media according to Claim 1, **characterised in that** the entire interior of the passenger compartment or the carriage is covered by the plurality of reading devices.

3. The system for detecting customer media according to Claim 1 or 2, **characterised in that**, for the case that the reading devices are arranged such that in each case two reading devices are provided on opposite side walls of the passenger compartment or carriage, which cover the space up to the opposite wall, the detection area of a reading device attached on the side wall of the passenger compartment or a carriage extends up to the reading devices diagonally opposite this reading device, as a result of which in each case four reading devices cover a common volume.

4. The system for detecting customer media according to Claim 1 or 2, **characterised in that** for the case that in each case two reading devices are arranged in the roof area or in the floor area symmetrically about the central longitudinal axis of the passenger compartment or carriage, wherein the detection area of the reading devices is essentially identical and essentially covers the entire width of the passenger compartment or carriage in the floor area or in the roof area, the detection area of the reading devices arranged in this manner, as viewed axially, completely or partially covers the detection area of the adjacent reading devices, as viewed axially, as a result of which in each case, up to six reading devices cover a common volume up to a predetermined height.

5. The system for detecting customer media according to Claim 1, 2, 3 or 4, **characterised in that** the number of the reading devices is dimensioned in such a manner that the passenger compartment or the carriage is completely covered in a redundant manner, without effecting a significant overreach beyond the passenger compartment or the carriage.

6. The system for detecting customer media according to Claim 1, 2, 3, 4 or 5, **characterised in that** the reading devices for transmitting and receiving signals have only one antenna in each case, which is realised as a directed radiating and receiving antenna.

7. The system for detecting customer media according to Claim 6, **characterised in that** the antenna is realised as a patch antenna.

8. The system for detecting customer media according to Claim 6 or 7, **characterised in that** the reading devices in each case have a wake-up modulator, by means of which a wake-up signal for the customer media can be radiated by means of the antenna.

9. The system for detecting customer media according to Claim 7 or 8, **characterised in that** the reading devices have a flat housing, wherein the side facing the passenger compartment or the carriage in the mounted state contains the antenna and the required electronics are arranged on the rear side.

## Revendications

1. Système de détection de supports de clients comprenant un émetteur/récepteur RF dans un moyen de transport public, dans lequel le système comprend par habitacle de véhicule ou par wagon une pluralité de dispositifs de lecture, qui sont reliés les uns aux autres et avec un ordinateur servant d'unité embarquée à des fins de communication de données, **caractérisé en ce que** les dispositifs de lecture sont disposés de telle sorte que respectivement deux dispositifs de lecture soient prévus sur des parois latérales opposées de l'habitacle de véhicule ou du wagon, qui couvrent l'espace jusqu'à la paroi opposée ou **en ce que** respectivement des dispositifs de lecture sont disposés dans la zone de toit ou dans la zone de plancher symétriquement autour de l'axe longitudinal de l'habitacle du véhicule ou du wagon, dans lequel la zone de détection des deux dispositifs de lecture respectifs est essentiellement identique et recouvre essentiellement la largeur totale de l'habitacle du véhicule ou du wagon dans la zone de plancher, respectivement dans la zone de toit, dans lequel vue axialement la zone de plancher, respectivement la zone de toit est couverte le long d'une longueur prescrite.

2. Système de détection de supports de clients selon la revendication 1, **caractérisé en ce que** la totalité de l'espace intérieur de l'habitacle du véhicule ou du wagon est couverte par la pluralité de dispositifs de lecture.

3. Système de détection de supports de clients selon la revendication 1 ou 2, **caractérisé en ce que** pour le cas où les dispositifs de lecture sont disposés de telle sorte que respectivement deux dispositifs de lecture sont prévus sur les parois latérales opposées de l'habitacle du véhicule ou du wagon, qui couvrent l'espace jusqu'à la paroi opposée, la zone de détection d'un dispositif de lecture monté sur la paroi latérale de l'habitacle du véhicule ou d'un wagon s'étend jusqu'aux dispositifs de lecture opposés en diagonale à ces dispositifs de lecture, moyennant quoi respectivement quatre dispositifs de lecture couvrent un volume commun.

4. Système de détection de supports de clients selon la revendication 1 ou 2, **caractérisé en ce que** pour le cas où respectivement deux dispositifs de lecture sont disposés dans la zone de toit ou dans la zone de plancher symétriquement autour de l'axe longitudinal médian de l'habitacle du véhicule ou du wagon, dans lequel la zone de détection des dispositifs de lecture est essentiellement identique et couvre essentiellement la largeur totale de l'habitacle du véhicule du wagon dans la zone de plancher, respectivement dans la zone de toit, la zone de détection des dispositifs de lecture disposés de cette sorte vue axialement couvre totalement ou partiellement la zone de détection des dispositifs de lecture voisins vue axialement, moyennant quoi respectivement jusqu'à six dispositifs de lecture couvrent un volume commun jusqu'à une hauteur prescrite.

5. Système de détection de support de clients selon la revendication 1, 2, 3 ou 4, **caractérisé en ce que** la pluralité des dispositifs de lecture est proportionnée de telle sorte que l'habitacle du véhicule ou le wagon soit couvert en totalité de manière redondante, sans provoquer une portée excessive significative au-dessus de l'habitacle du véhicule ou du wagon.

6. Système de détection de supports de clients selon la revendications 1, 2, 3, 4 ou 5, **caractérisé en ce que** les dispositifs de lecture présentent respectivement une antenne pour émettre et recevoir des signaux, qui est conçue comme une antenne émettrice et réceptrice de manière ciblée.

7. Système de détection de supports de clients selon la revendication 6, **caractérisé en ce que** l'antenne est conçue comme une antenne « patch ».

8. Système de détection de support de clients selon la revendication 6 ou 7, **caractérisé en ce que** les dispositifs de lecture présentent respectivement un modulateur de réveil, par l'intermédiaire duquel au moyen de l'antenne un signal de réveil peut être émis vers les supports de clients.

9. Système de détection de support de clients selon la revendication 7 ou 8, **caractérisé en ce que** les dispositifs de lecture présentent un boîtier plat, dans lequel le côté tourné vers l'habitacle du véhicule ou le wagon en l'état monté contient l'antenne et l'électronique nécessaire est disposée sur le côté arrière.
